# EUROPEAN PATENT APPLICATION

(11) **EP 4 738 099 A1**
(43) Date of publication of application: **06.05.2026**
(21) Application number: 25162874.9
(22) Date of filing: 11.03.2025
(51) Int. Cl.: G06F 8/35, G06F 9/451, G06F 8/38

(54) **TECHNIQUES FOR GENERATING USER INTERFACES ASSISTED BY GENERATIVE PRE-TRAINED TRANSFORMER CODE GENERATOR**

(30) Priority: 05.11.2024 US 202418937555
(71) Applicant: SAP SE, 69190 Walldorf (DE)
(72) Inventor: IRELAND, Evan, 69190 Walldorf (DE)
(74) Representative: Müller-Boré & Partner Patentanwälte PartG mbB

(57) **Abstract**

In some implementations, the techniques may include accessing a data file containing metadata for various data fields. The techniques may include accessing a list of predefined categories and creating a first request to a generative pre-trained transformer to categorize portions of the metadata by assigning the portions of the metadata to predefined categories of the list of predefined categories. The techniques may include receiving a first output list from the generative pre-trained transformer comprising the portions of the metadata and the assigned predefined categories. The techniques may include generating labels, features and ordering using the list of categories. The techniques may include generating application code using one or more code generation templates and the labels and features for an application. The techniques may include storing the application code. The techniques may be performed by a system or stored as a series of instructions on a computer-readable tangible medium.

## Description

### BACKGROUND

Software applications have the capability to generate other software applications up to and including the generation of the specific program code for those applications. However, many of these applications that can be developed using these developer tools produce user interfaces that are not initiative to a user and are not organized and ordered in a way that is helpful to a user. The user interfaces for these applications may present data in a boilerplate fashion or using traditional rules such as displaying fields in alphabetical order. The data may be presented in such a way that is unreadable or illogical to a user. Further, editing these applications created using the developer tools can be an arduous task by developers to correct the deficiencies of these development tools.

Application developers can use improved tools using artificial intelligence to assist in the development of more user-friendly applications, including user interfaces for those applications, using data and efficient ways to customize those applications.

### SUMMARY

A system of one or more computers can be configured to perform particular operations or actions by virtue of having software, firmware, hardware, or a combination of them installed on the system that in operation causes the system to perform the actions. One or more computer programs can be configured to perform particular operations or actions by virtue of including instructions that, when executed by data processing apparatus, cause the apparatus to perform the actions.

In one general aspect, a computer implemented method may include accessing a data file containing metadata for various data fields. The computer implemented method may include accessing a list of predefined categories. The method may include creating a first request to a generative pre-trained transformer to categorize portions of the metadata by assigning the portions of the metadata to predefined categories of the list of predefined categories. This method may include receiving a first output list from the generative pre-trained transformer comprising the portions of the metadata and the assigned predefined categories. The method may moreover include generating labels, features and ordering using the list of categories. The method may also include generating application code using one or more code generation templates and the labels and features for an application. The method may furthermore include storing the application code. Other embodiments of this aspect include corresponding computer systems, apparatus, and computer programs recorded on one or more computer storage devices, each configured to perform the actions of the methods.

Implementations may include one or more of the following features. In various embodiments, the computer implemented method may include creating a second request to a generative pre-trained transformer to determine categories to filter business data from the data file using the list of predefined categories. The computer implemented method may include receiving a second output list of proposed filters from the generative pre-trained transformer. The computer implemented method may include generating one or more filters based on the second output list of proposed filters. The computer implemented method may include generating application code using one or more code generation templates and the one or more filters for the application. The computer implemented method may include generating the application code. The computer implemented method may include storing the application code.

Computer implemented methods may include creating a third request to a generative pre-trained transformer to determine categories to sort business data from the data file using the list of predefined categories. The computer implemented method may include receiving a third output list of proposed sorting terms from the generative pre-trained transformer. The computer implemented method may include generating one or more sorting features to sort the metadata based on the third output list of proposed sorting terms. The computer implemented method may include generating application code using one or more code generation templates and the one or more sorting features for the application. The computer implemented method may include storing the application code. In various embodiments, the data file may include an extensible markup language file. In various embodiments, the data file may include structures and objects in JavaScript Object Notation (JSON) format. In various embodiments, the computer implemented method may include assigning a color to a data element in a display for an application based at least in part on the list of categories specific to the data element. In various embodiments, the process of generating application code may include parsing the data file to determine placeholders and elements. The process may include generating a data model containing values to be substituted in for the placeholders and the elements. The process may include serializing the data model into text. The process may include applying transformations to the text to convert into a code format.

Implementation of the described techniques may be performed by a system including various hardware components, as a method or process, or stored as a series of instructions on a computer-readable tangible medium.

The following detailed description and accompanying drawings provide a better understanding of the nature and advantages of various embodiments of the present disclosure.

### BRIEF DESCRIPTION OF THE DRAWINGS

FIG. 1 illustrates a collection of exemplary user interfaces for an application that was generated using traditional developer tools.
FIG. 2 illustrates an exemplary block diagram illustrating various processes for generating user interfaces and for revising user interfaces using artificial intelligence.
FIG. 3 illustrates a first exemplary user interface depicting an exemplary application menu.
FIG 4 illustrates a second exemplary user interface depicting a visits feature for a particular day.
FIG. 5 illustrates a third exemplary user interface depicting a visits feature for a particular week.
FIG. 6 illustrates a fourth exemplary user interface depicting a details page for a particular visit.
FIG. 7 illustrates a fifth exemplary user interface depicting a map feature for a particular visit.
FIG. 8 illustrates a sixth exemplary user interface depicting a details page for a particular visit.
FIG. 9 illustrates a seventh exemplary user interface depicting a contacts list page.
FIG. 10 illustrates an eighth exemplary user interface depicting a contacts details page.
FIG. 11 illustrates a ninth exemplary user interface depicting a contacts details page.
FIG. 12 illustrates a tenth exemplary user interface depicting a products page.
FIG. 13 illustrates an eleventh exemplary user interface depicting features for a products page.
FIG. 14 illustrates a twelfth exemplary user interface depicting a filtering feature.
FIG. 15 illustrates a thirteenth exemplary user interface depicting a category page for a filtering feature.
FIG. 16 illustrates a fourteenth exemplary user interface depicting a results page for a filtering feature.
FIG. 17 illustrates a flowchart for a process for generating a user interface using artificial intelligence.
FIG. 18 illustrates an exemplary computer system for implementing various embodiments described above.
FIG. 19 illustrates an exemplary computing device for implementing various embodiments described above.
FIG. 20 illustrates an exemplary system for implementing various embodiments described above.

### DETAILED DESCRIPTION

In the following description, for purposes of explanation, numerous examples and specific details are set forth to provide a thorough understanding of the present disclosure. It will be evident, however, to one skilled in the art that various embodiments of the present disclosure as defined by the claims may include some or all of the features in these examples alone or in combination with other features described below and may further include modifications and equivalents of the features and concepts described herein.

As discussed above, various developer tools for creating applications and user interfaces face significant shortcomings. First the developer tools often produce user interfaces that are not initiative to a user and are not organized or ordered in a way that is helpful to a user. The user interfaces generated by the developer tools may present data in a boilerplate fashion or using traditional rules such as displaying fields solely in alphabetical order.

The data may be presented in such a way that is unreadable to a user. Further, editing these applications created using the developer tools can be an arduous task by developers to correct the deficiencies of these artificial intelligence tools.

Described herein are techniques for generating user interfaces assisted by a generative pre-trained transformer code generator. Improved tools can use artificial intelligence to assist in the development of more user-friendly applications, including user interfaces for those applications, using data. Further techniques can allow for efficient ways to customize those applications.

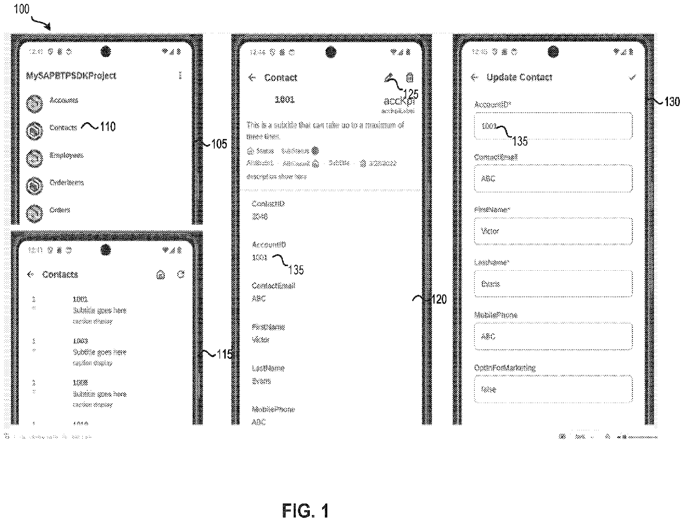

FIG. 1 illustrates a collection 100 of exemplary user interfaces for an application that was generated using traditional developer tools. The collection 100 of user interfaces for an application is used to illustrate some but not all of the shortcomings of applications developed by developer application tools. The shortcomings are independent of the platform (e.g., iOS, Android, etc.) or device that the application is being executed on. The shortcomings also exist for various types of applications (e.g., business specific applications, personal finance applications, entertainment applications, networking applications, etc.).

A first portion 105 of the collection 100 of exemplary user applications illustrates a portion of a menu screen for a fictional application entitled "MySAPBTPSDKProject." The first portion 105 can display various different menu items that can be created for the data by developer tools. For example, as shown in the first portion 105, the menu can list various features such as but not limited to Accounts, Contacts, Employees, Order Items, and Orders. Selecting any one of these features can open different user interfaces. For example, selecting the Contacts key 110 can result in opening the contacts user interface 115.

The contacts user interface begins to illustrate some of the challenges associated with developer tools. Instead of presenting a list of names in logical order (e.g., alphabetical order by last name) the contacts user interface 115 displays number (e.g., "1001", "1003", and "1008") because the developer tool did not select the correct fields and data to complete the contacts user interface in such a way that would be usable. Further none of the subfields are completed. As shown, the developer user application does not show any useful information because the developer tool is likely keyed in on the account ID for contact information. But AccountID is not really a useful metric for a user as opposed to the unique ID for the contact. In addition, most of the fields are in alphabetical order. The names are displayed exactly as they are stored in the metadata. The spacing for the information is not altered in any way to make the information more readable for a user.

The developer tool user interface may not be informed by AI, so the developer tools would not be informed on the data elements that should be highlighted in in the header on the details screen or the information that a user would find helpful on a list screen.

While the developer tool may produce an application, it leaves many developer hours altering the application to be usable.

The second portion 120 of the collection 100 of exemplary user interfaces illustrates a details page for the contact. This illustrates that the contact information for contact 1001 is indeed stored in the data and it would be more helpful to the user if the name "Victor Evans" or "Evans, Victor" were displayed in the contacts list instead of the number of the contact (e.g., 1001). Developer tools may allow correction of this information for the application by updating the contact using the edit button 125 which would open the update contact portion 130. A user can update the account ID 135 with the appropriate account ID for the contact, but without an extra screen to easily let them select that account ID from a list of available accounts, it would be an arduous and time-consuming task. Alternatively, a developer would have to edit many lines of code to present information in a logical and user-friendly format.

There are many other shortcomings with user interfaces generated by developer tools which are not illustrated in FIG. 1. Correcting these interfaces will be an arduous task for the developer to manually accomplish by editing the many lines of code for the application.

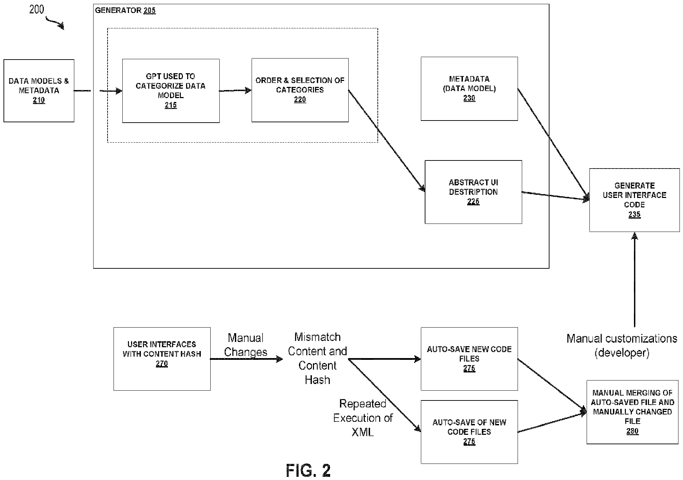

FIG. 2 illustrates an exemplary block diagram 200 illustrating various processes for generating user interfaces and for revising user interfaces using artificial intelligence.

The processes can use data files such as OData metadata documents. An OData metadata document is a data file such as an XML document or a JSON document that describes the structure and capabilities of an OData (Open Data Protocol) service. OData is a protocol used for building and consuming RESTful APIs, and its metadata document plays a key role in exposing the schema of the underlying data to clients in a standardized way.

The metadata document is automatically generated by an OData service and provides details about the entities, relationships, data types, and operations available through the service. This metadata enables clients to understand how to query and interact with the service.

The metadata document defines the entity types, which represent the data models (like database tables) exposed by the service. Each entity type contains a set of properties (fields or columns), their data types, and other constraints like keys and nullability.

The metadata document defines the entity sets. An entity set is a collection of instances of a specific entity type (similar to a table in a relational database). The metadata document defines these entity sets and their relationships.

A complex type of OData document is a structured type within the metadata that can group multiple properties but does not have its own key (unlike entity types). It can be used for reusable data structures like addresses or contact information.

The metadata document also defines relationships (or associations) between entities, such as one-to-one, one-to-many, or many-to-many relationships. These are often referred to as navigational properties, allowing clients to navigate between related entities.

OData supports exposing custom operations or actions that go beyond standard CRUD (Create, Read, Update, Delete) operations. These are defined in the metadata as functions (which are read-only operations) and actions (which can modify data).

The metadata document describes the data types of each property, including primitive types like strings, integers, dates, etc., as well as custom data types defined by the service.

OData documents provide annotations and provide additional semantic information about the data, such as constraints, validation rules, or display hints. These help clients understand how to use or present the data.

A generator 205 can refer to an application or system built using Generative Pre-trained Transformer (GPT) models, like OpenAI's GPT, to generate text. GPT models are large neural networks designed to understand and generate human-like language based on the input they receive. They work by predicting the next word in a sentence, which enables them to create coherent and contextually relevant text across a variety of tasks.

According to the disclosed techniques data models and associated metadata 210 can be provided as an input to the generator. A data model is an abstract representation of the structure, relationships, and constraints of data in a system. It provides a framework for organizing and defining data elements and their interactions, enabling efficient data management and storage. Data models are essential in software development, database design, and information management, as they help ensure data integrity, consistency, and accessibility.

Metadata is often described as data about data. In the context of a data model, metadata provides essential information that describes the characteristics, structure, and context of the data within the model. It plays a crucial role in understanding how to manage, interpret, and use the data effectively. The metadata can include descriptive metadata, structural metadata, administrative metadata, technical metadata, and contextual metadata. Descriptive Metadata provides information about the data's content, context, and purpose. It helps users understand the data and its significance. Structural Metadata describes the organization and structure of the data, including how different data elements are related.

Administrative Metadata provides information needed to manage and maintain the data model, including details about data governance, security, and usage.

Technical Metadata relates to technical specifications and requirements for storing, processing, and retrieving the data.

Contextual Metadata provides context about how the data was collected, processed, and used. This can help users understand the limitations and applicability of the data.

OData documents can include navigation properties that describe relationships between pieces of data in the data file.

In addition, generator 205 can be provided with a list of predefined categories related to a business system. The techniques can generate a command request to the GPT to categorize portions of the data model entity type names using predefined categories (e.g., address, document, event, organization, person).

At block 215, the generator 205 can categorize the data model property names into predefined categories (e.g., name, address, phone, email, location, priority, and status.)

At block 220, the generator 205 can use a predefined list for ordering and selection of categories based on typical conventions for business application user interfaces. The predefined list can be used to generate labels, features, and ordering for user interfaces for an application.

At block 225, generator 205 can produce an abstract User Interface (UI) description of each view (e.g., HomeView.xml, ListView.xml, etc.). The Abstract UI and metadata (data model) 230 for a selected entity type can be provided to a code generation template to generate the programming code.

At block 235, the template can generate the user interface code. Program code can be generated using a cross-platform, statically typed, general-purpose high-level programming language with type interface (e.g., Kotlin). Other programming languages can also be used, such as but not limited to, Java, Scala, Swift, Groovy, C#, F#, Dart, Python, and TypeScript.

Kotlin is a modern, statically typed programming language that runs on the Java Virtual Machine (JVM) and is fully interoperable with Java. Kotlin can also be compiled to JavaScript and native code, allowing it to be used in web and mobile development (beyond Android). It is popular among developers due to its modern features, strong tooling support, and seamless integration with Java-based environments.

The programming code can be generated using one or more code generation templates and the labels and features for the application provided from generator 205. Code generation templates are predefined structures or formats used to automatically generate source code based on specific inputs or configurations. These templates act as blueprints for creating repetitive or standardized code efficiently, saving developers time and reducing the chances of errors. Code generation templates are commonly used in software development tools, frameworks, and environments to automate coding tasks.

Templates contain placeholders for variable data that can be dynamically filled in. This might include classes, methods, functions, or other code components that follow a specific pattern. Developers can customize the template by providing different inputs or configurations, such as names of classes, variables, functions, or specific functionality, allowing the generated code to fit their specific use case. Once a template is created, it can be reused across different projects, allowing for rapid code generation in various scenarios without manually rewriting the same code repeatedly. Code generation templates help ensure that coding practices and standards are consistently applied, reducing errors due to manual coding. Code generation templates significantly reduce development time by automating the creation of repetitive or boilerplate code, such as data models, Create, Read, Update, Delete (CRUD) operations, configurations, etc.

Some exemplary code generation templates can include but are not limited to Django, Ruby, and Spring Boot. Django (Python) or Ruby on Rails use templates for generating models, controllers, views, and other components based on a single command, streamlining web development. Spring Boot (Java) has templates for generating boilerplate code for REST controllers, services, and repositories. Application Programming Interfaces (APIs) development tools like Swagger or OpenAPI use templates to automatically generate client SDKs in multiple languages from API specifications. Tools like Entity Framework (C#) or SQLAlchemy (Python) can generate database migration scripts using code generation templates based on changes in the data model. Front-end frameworks like Angular and React provide templates to generate components, services, and modules through command-line interfaces (CLI).

In various embodiments, the application code can be stored in a memory (e.g., a cloud-based storage system).

In another aspect, chat features can be used to customize an application.

A developer can provide manual customization of the code. In a manual customization path, user interfaces in a programming language with content hash 270 can be used. A content hash in programming is a unique identifier generated from the contents of a file, data, or any block of information. The content itself is processed through a hashing algorithm (like MD5, SHA-256, etc.) to produce a fixed-size hash value, also known as a digest. This hash represents the data's content, such that even a slight change in the data will produce a completely different hash.

Manual changes can be performed on the user interfaces. A process such as an algorithm can be performed to determine a mismatch between the content and the content hash. The auto-save features 275 can be used to store the new code files. This process can be repeated as necessary.

At block 280, the technique can manually merge the auto-saved file and manually change the data file.

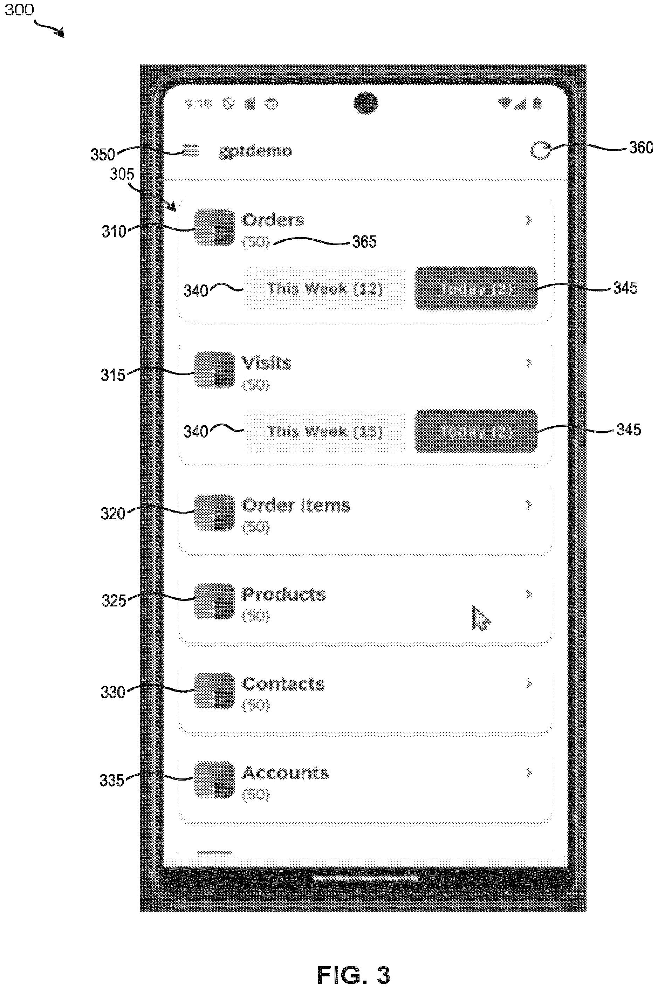

FIG. 3 illustrates a first exemplary user interface 300 depicting an exemplary application menu or list view 305. The first exemplary user interface 300 can be a home page for an application. The menu or list view 305 can include various categories that may be typical for a business application. The menu or list view 305 can be generated using the information from the data file and the metadata associated with the data file. The menu or list view 305 category names can be informed using artificial intelligence as described in the block diagram 200 above.

In one noticeable improvement, the menu or list view 305 is organized in such a way to place important things near the top of the display. For example, visits today may be more important than contact information.

For example, in various embodiments the menu or list view 305 can include features such as Orders 310, Visits 315, Order Items 320, Products 325, Contacts 330, and Accounts 335. Various menu or list items can have the ability to filter or sort the items in the underlying menu items or list view 305. For example, Orders can be filtered for using a This Week 340 filter or Today filter 345.

A menu button 350 and a refresh button 360 can also be provided. The number 365 in each menu or list item can also be displayed.

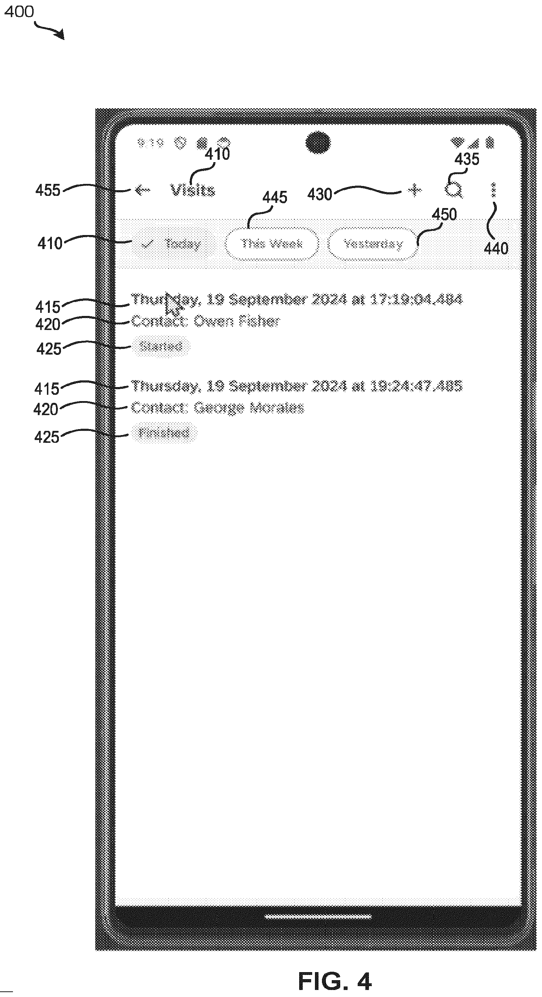

FIG 4 illustrates a second exemplary user interface 400 depicting a Visits feature for a particular day. The second exemplary user interface 400 displays a list view of scheduled visits filtered for the present day. The second exemplary user interface 400 can display the title 410 of the user interface. The list view can provide the date and time information 415 for the visit, the contact 420 for the visit, and the status 425 of the visit (e.g., scheduled, cancelled, started, finished, etc.). The improved user interface informed using AI provides important information up front to a user and color coded based on the status 425 of the visit. The AI provides informed decisions about what to put on the screens and what order and what to highlight.

The second exemplary user interface 400 can use different colors for different statuses 425. The list view can provide a filter/sort button 430, a search button 435, and an edit button 440. The list view can also have a This Week sort button 445 and a Yesterday sort button 450. The second exemplary user interface 400 can display a back button 455. The back button 455 can return the user to a previous user interface or return the user to the menu/list user interface. The second exemplary user interface 400 is merely one example of one potential user interface created with the data models and metadata as organized using artificial intelligence. Other user interface configurations are possible.

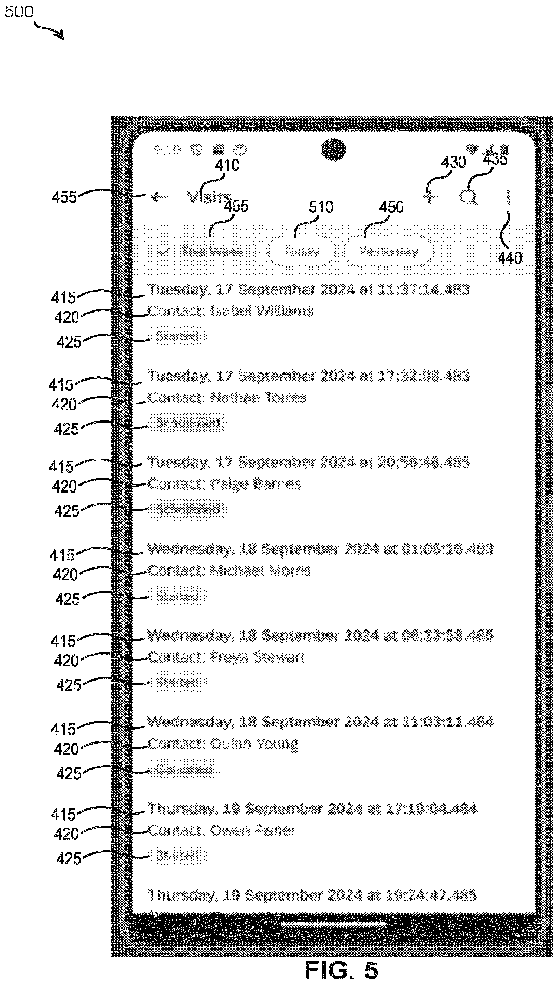

FIG. 5 illustrates a third exemplary user interface 500 depicting a visits feature for a particular week. The third exemplary user interface 500 displays a list view of scheduled visits filtered for this week.

The third exemplary user interface 500 can display the title 410 of the user interface. The list view can provide the date and time information 415 for the visit, the contact 420 for the visit, and the status 425 of the visit (e.g., scheduled, cancelled, started, finished, etc.). The third exemplary user interface 500 can use different colors for different status 425. The list view can provide a filter/sort button 430, a search button 435, and an edit button 440. The list view can also have a Today sort button 510 and a Yesterday sort button 450. The third exemplary user interface 500 can display a back button 455. The third exemplary user interface 500 is merely one example of one potential user interface created with the data models and metadata as organized using artificial intelligence. Other user interface configurations are possible.

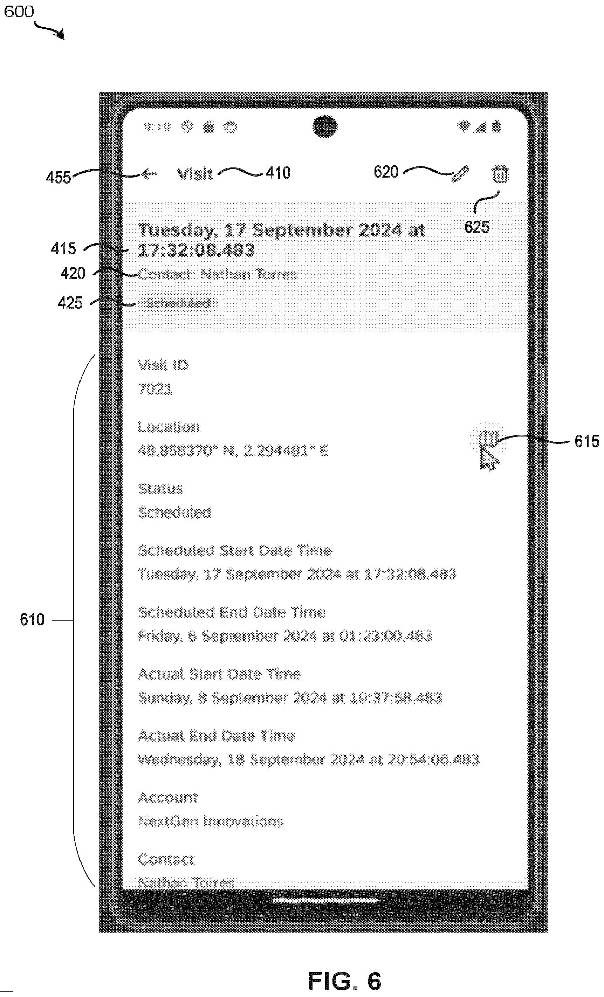

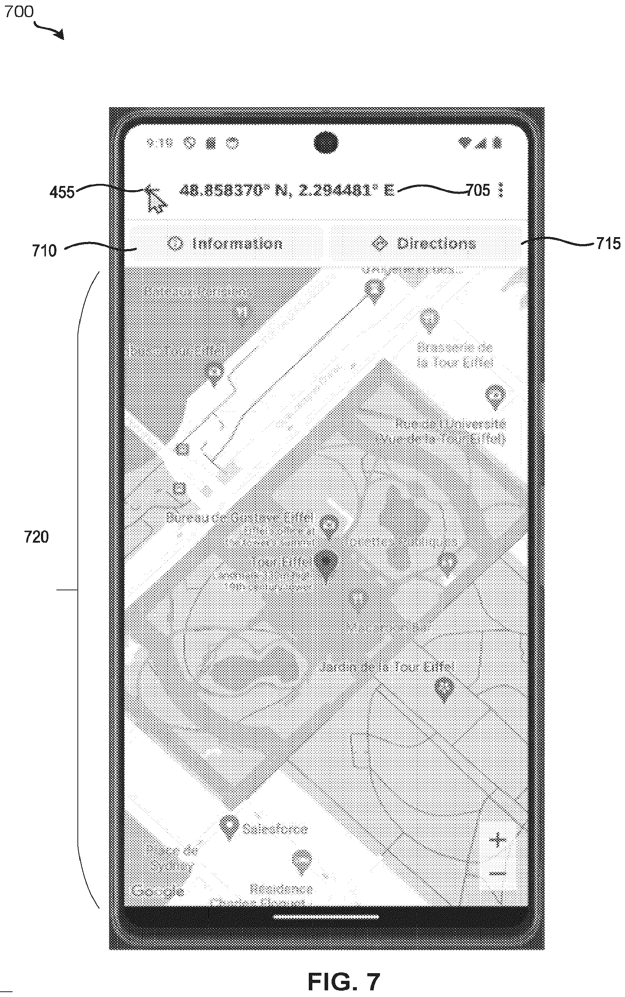

FIG. 6 illustrates a fourth exemplary user interface 600 depicting a details page for a particular visit. The fourth exemplary user interface 600 can display the title 410 of the user interface. The fourth exemplary user interface 600 displays the date and time information 415 for the visit, the contact 420 for the visit, and the status 425 of the visit (e.g., scheduled, cancelled, started, finished, etc.). The fourth exemplary user interface 600 can use different colors for different status 425. The fourth exemplary user interface 600 can display various details regarding the visit. The visits details 610 can include, but are not limited to, a Visit ID, Location of Visit, Status, Scheduled Start Date Time, Scheduled End Date Time, Actual Start Date Time, Actual End Date Time, Account, Contact. Abeam the location of visit information can be a map icon 615. The map icon 615 can provide a link to an electronic map. Selecting the map icon 615 can display the fifth exemplary user interface 700 as shown in FIG. 7.

The fourth exemplary user interface 600 can display an edit icon 620 and a trashcan icon 625. Selecting the edit icon 620 can allow a user to edit the information in the contact. Selecting the trashcan icon 625 can delete the contact. The fourth exemplary user interface 600 can display a back button 455. The back button 455 can return the user to a previous user interface or return the user to the menu/list user interface. The fourth exemplary user interface 600 is merely one example of one potential user interface created with the data models and metadata as organized using artificial intelligence. Other user interface configurations are possible.

FIG. 7 illustrates a fifth exemplary user interface 700 depicting a map feature for a particular visit. The fifth exemplary user interface 700 can display the coordinates 705 for the meeting location. The coordinates can be displayed as latitude and longitude. Additional information regarding the location can be provided by selecting the Information button 710. Selecting the Directions button 715 can display directions from the present position of the device to the location of the visit. The fifth exemplary user interface 700 can display a back button 455. The back button 455 can return the user to a previous user interface or return the user to the menu/list user interface.

A geographic map 720 illustrating the meeting location can also be displayed.

The fifth exemplary user interface 700 is merely one example of a potential user interface created with data models and metadata as organized using artificial intelligence. Other user interface configurations are possible.

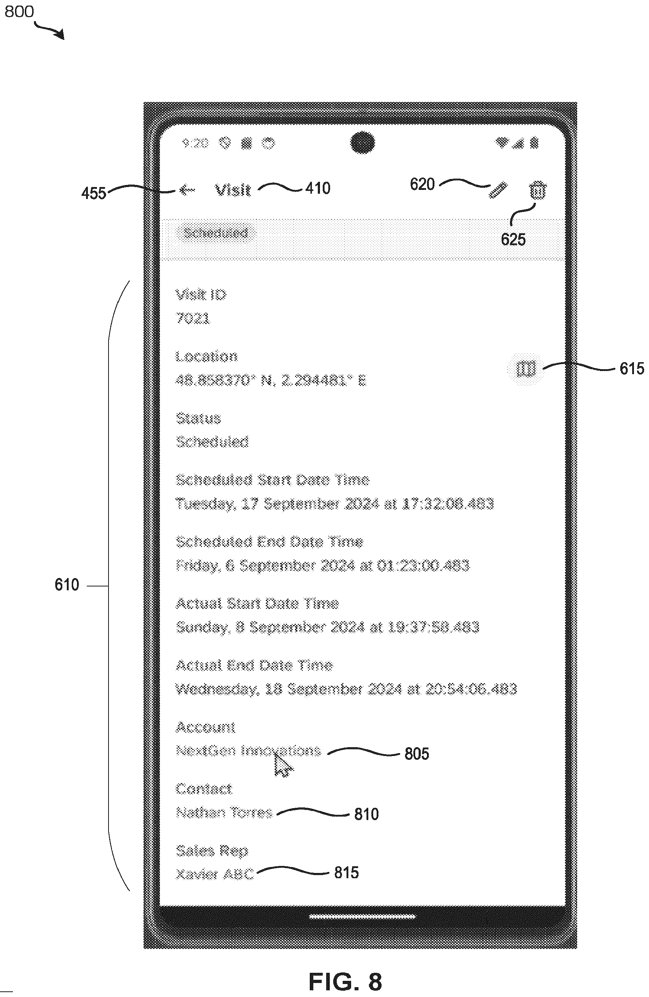

FIG. 8 illustrates a sixth exemplary user interface 800 depicting a details page for a particular visit. The sixth exemplary user interface 800 can display the title 410 of the user interface. The sixth exemplary user interface 800 displays the date and time information 415 for the visit, the contact 420 for the visit, and the status 425 of the visit (e.g., scheduled, cancelled, started, finished, etc.). The sixth exemplary user interface 800 can use different colors for different status 425. The sixth exemplary user interface 800 can display various details regarding the visit. The details 610 can include, but are not limited to, a Visit ID, Location of Visit, Status, Scheduled Start Date Time, Scheduled End Date Time, Actual Start Date Time, Actual End Date Time, Account, Contact. Abeam the location of visit information can be a map icon 615. The map icon 615 can provide a link to an electronic map. Selecting the map icon 615 can display the fifth exemplary user interface 700 as shown in FIG. 7.

The sixth exemplary user interface 800 illustrates an account link 805, a contact link 810, and a sales representative link 815. Selecting the account link 805 can bring up the account details for the selected account (e.g., NextGen Innovations). Selecting the contact link 810 can open the contact information for the listed contact (e.g., Nathan Torres). Selecting the sales representative link 815 can open the contact information for the sales representative (e.g., Xavier ABC).

The sixth exemplary user interface 800 can display an edit icon 620 and a trashcan icon 625. Selecting the edit icon 620 can allow a user to edit the information in the contact. Selecting the trashcan icon 625 can delete the contact. The sixth exemplary user interface 800 can display a back button 455. The back button 455 can return the user to a previous user interface or return the user to the menu/list user interface. The sixth exemplary user interface 800 is merely one example of one potential user interface created with the data models and metadata as organized using artificial intelligence. Other user interface configurations are possible.

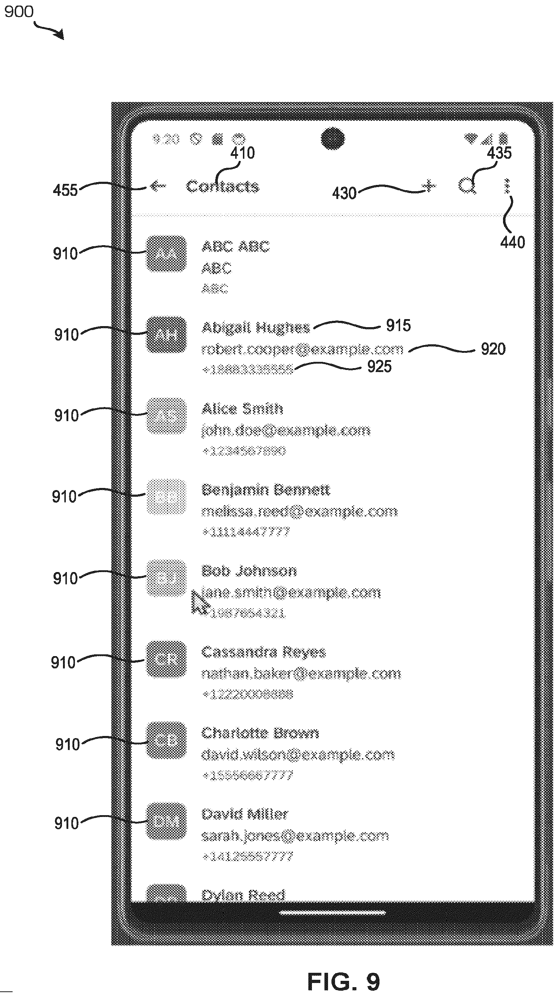

FIG. 9 illustrates a seventh exemplary user interface 900 depicting a contacts list view page. The contacts can be listed in any one of logical orders (e.g., alphabetical order by first name, alphabetical order by last name, alphabetical order of business name, frequently used contact first, etc.). The second exemplary user interface 400 can display the title 410 of the user interface. The list view can provide a filter/sort button 430, a search button 435, and an edit button 440. The seventh exemplary user interface 900 can display a back button 455. The back button 455 can return the user to a previous user interface or return the user to the menu/list user interface. The seventh exemplary user interface 900 can display a text avatar 910 for each contact entry. The text avatars 910 can be color coded using various color combinations. The text avatars 910 can be a combination of first initial and last initial for a person. The seventh exemplary user interface 900 can display detailed information for each contact (e.g., first name/last name 915, email address 920, and phone number 925). The seventh exemplary user interface 900 is merely one example of one potential user interface created with the data models and metadata as organized using artificial intelligence. Other user interface configurations are possible.

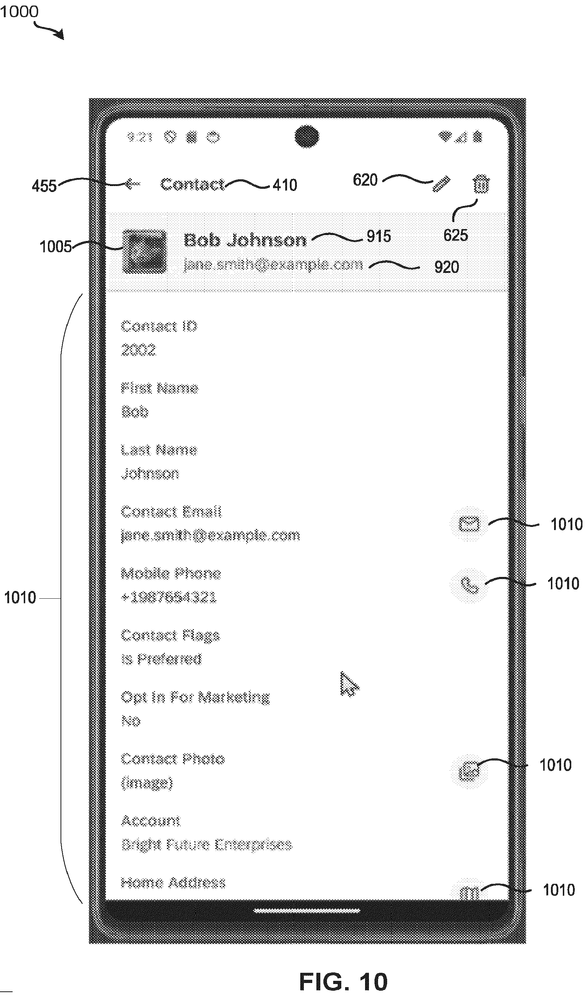

FIG. 10 illustrates an eighth exemplary user interface 1000 depicting a contacts details page. The eighth exemplary user interface 1000 can display the title 410 of the user interface. The illustrates an eighth exemplary user interface 1000 can display an edit icon 620 and a trashcan icon 625. Selecting the edit icon 620 can allow a user to edit the information in the contact. Selecting the trashcan icon 625 can delete the contact. The eighth exemplary user interface 1000 can display a back button 455. The back button 455 can return the user to a previous user interface or return the user to the menu/list user interface. The eighth exemplary user interface 1000 can display detailed information for each contact (e.g., first name/last name 915, email address 920, and phone number 925). The eighth exemplary user interface 1000 can display a picture 1005 of the contact.

The eighth exemplary user interface 1000 can display various contact details 1010. The contact details 1010 can include but are not limited to ContactID, First Name, Last Name, Contact Electronic mail (Email), Mobile Phone, Contact Flags, Opt In/Out for Marketing, Account, Home Address, Work Address, Phone Numbers, Other Addresses etc.) The eighth exemplary user interface 1000 can include an electronic mail link 1015, a phone link 1020, an image link 1025, and one or more map links 1030. An electronic mail link 1015 can build an electronic mail application using the email address of the contact. The phone link 1020 can initiate a call to the contact phone number. The image link 1025 can open an image of the contact in the photo storage. The map link 1030 can display an electronic map of the address. The eighth exemplary user interface 1000 is merely one example of one potential user interface created with data models and metadata as organized using artificial intelligence. Other user interface configurations are possible.

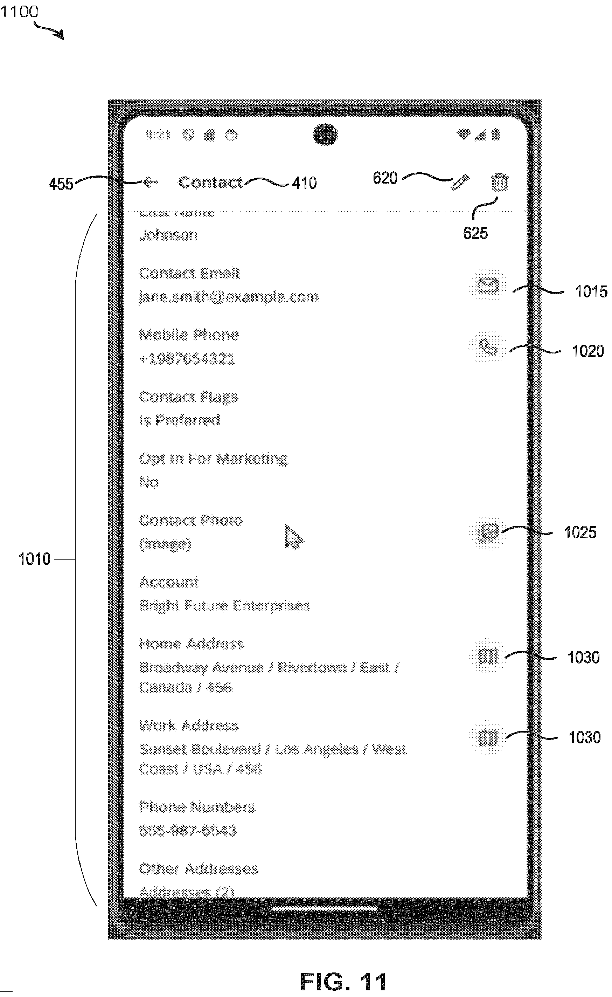

FIG. 11 illustrates a ninth exemplary user interface 1100 depicting a contacts details page. The ninth exemplary user interface 1100 can display the title 410 of the user interface. The illustrates a ninth exemplary user interface 1100 can display an edit icon 620 and a trashcan icon 625. Selecting the edit icon 620 can allow a user to edit the information in the contact. Selecting the trashcan icon 625 can delete the contact. The ninth exemplary user interface 1100 can display a back button 455. The back button 455 can return the user to a previous user interface or return the user to the menu/list user interface. The ninth exemplary user interface 1100 can display detailed information for each contact (e.g., first name/last name 915, email address 920, and phone number 925). The ninth exemplary user interface 1100 can display a picture 1005 of the contact.

The ninth exemplary user interface 1100 can display various contact details 1010. The contact details 1010 can include but are not limited to ContactID, First Name, Last Name, Contact Email, Mobile Phone, Contact Flags, Opt In/Out for Marketing, Account, Home Address, Work Address, Phone Numbers, Other Addresses etc.) The ninth exemplary user interface 1100 can include an email link 1015, a phone link 1020, an image link 1025, and one or more map links 1030. The email link 1015 can build an electronic mail application using the email address of the contact. The phone link 1020 can initiate a call to the contact phone number. The image link 1025 can open an image of the contact in the photo storage. The map link 1030 can display an electronic map of the address. The ninth exemplary user interface 1100 is merely one example of one potential user interface created with data models and metadata as organized using artificial intelligence. Other user interface configurations are possible.

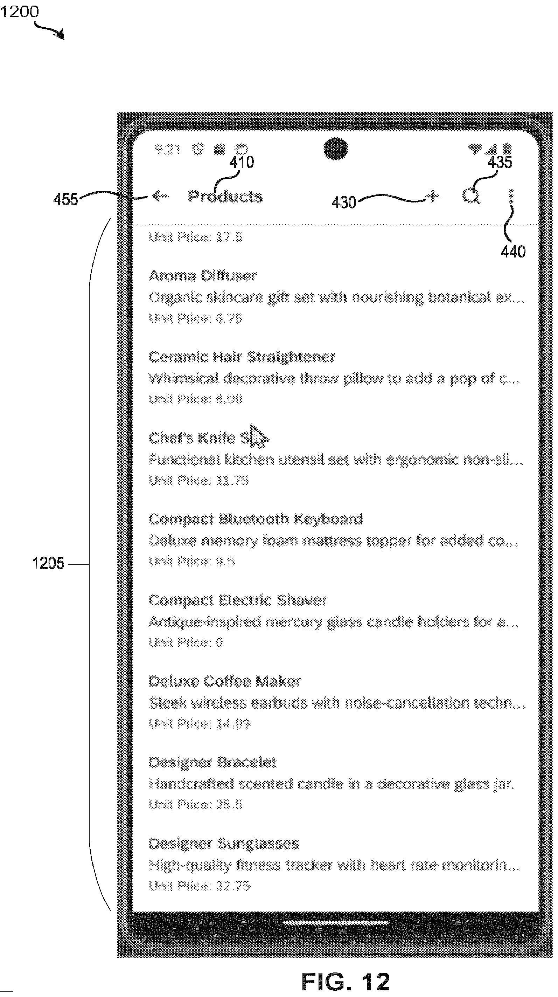

FIG. 12 illustrates a tenth exemplary user interface 1200 depicting a products page. The tenth exemplary user interface 1200 can display the title 410 of the user interface. The tenth exemplary user interface 1200 can display a back button 455. The back button 455 can return the user to a previous user interface or return the user to the menu/list user interface.

The list view can provide a filter/sort button 430, a search button 435, and an edit button 440. The tenth exemplary user interface 1200 can provide product details 1205 about each of the products (e.g., name, description, and unit price). The tenth exemplary user interface 1200 is merely one example of one potential user interface created with data models and metadata as organized using artificial intelligence. Other user interface configurations are possible.

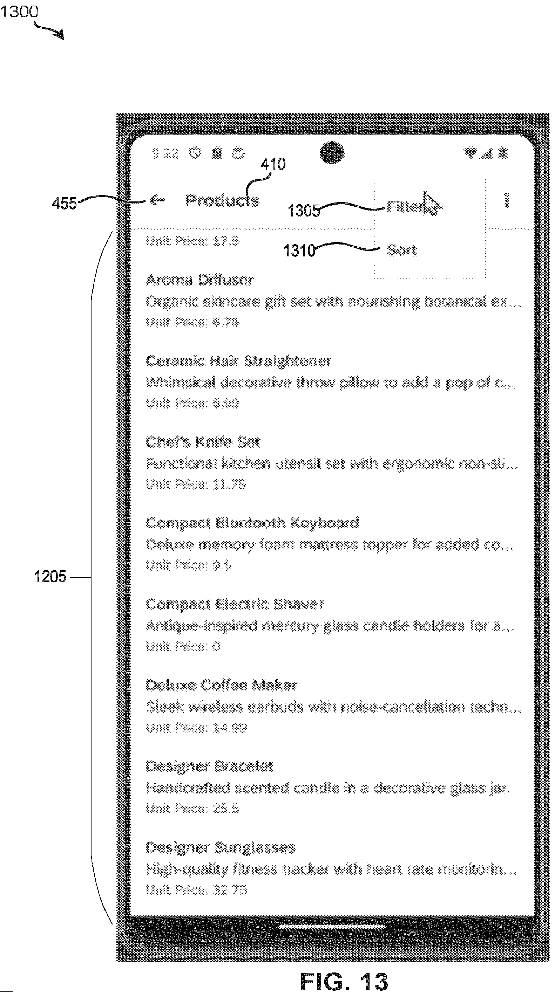

FIG. 13 illustrates an eleventh exemplary user interface 1300 depicting features for a products page. The eleventh exemplary user interface 1300 can display the title 410 of the user interface. The eleventh exemplary user interface 1300 can display a back button 455. The back button 455 can return the user to a previous user interface or return the user to the menu/list user interface. The eleventh exemplary user interface 1300 can display a filter button 1305 to allow filtering of the product list. The eleventh exemplary user interface 1300 can display a sort button 1310 to allow sorting of the product list. The tenth exemplary user interface 1200 is merely one example of one potential user interface created with data models and metadata as organized using artificial intelligence. Other user interface configurations are possible.

The list view can provide a filter/sort button 430, a search button 435, and an edit button 440. The eleventh exemplary user interface 1300 can provide a product details 1205 about each of the products (e.g., name, description, and unit price). The eleventh exemplary user interface 1300 is merely one example of one potential user interface created with the data models and metadata as organized using artificial intelligence. Other user interface configurations are possible.

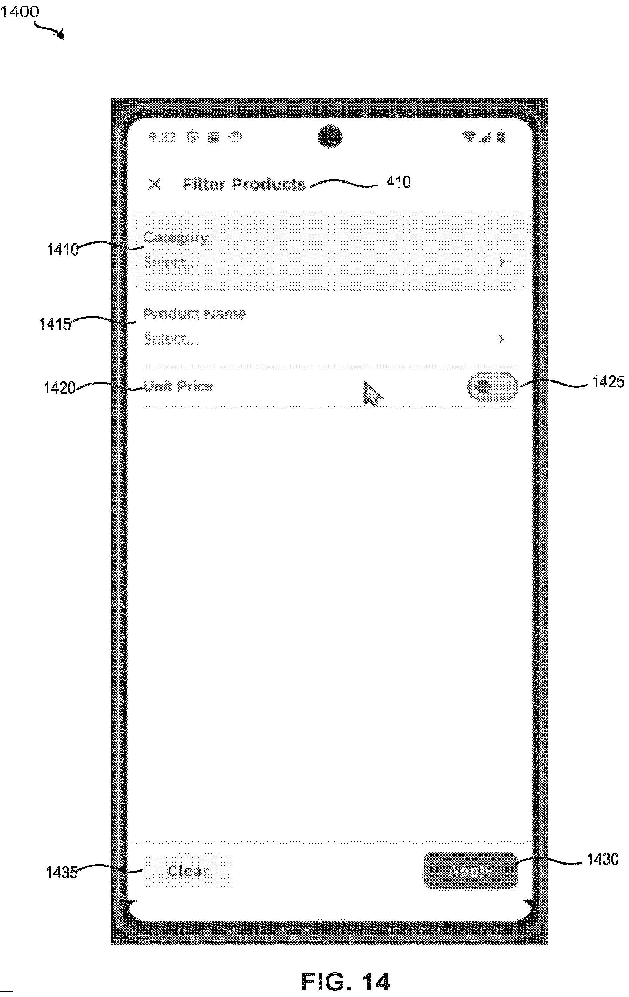

FIG. 14 illustrates a twelfth exemplary user interface 1400 depicting a filtering feature. The twelfth exemplary user interface 1400 can display the title 410 of the user interface. The product list can be filtered by category 1410, product name 1415, and unit price 1420. There is a selector switch 1425 that can be displayed to turn on or off one of the selected filters. The filters can be applied by depressing the Apply button 1430. The filters can be cleared by depressing the clear button 1435. The twelfth exemplary user interface 1400 is merely one example of one potential user interface created with the data models and metadata as organized using artificial intelligence. Other user interface configurations are possible.

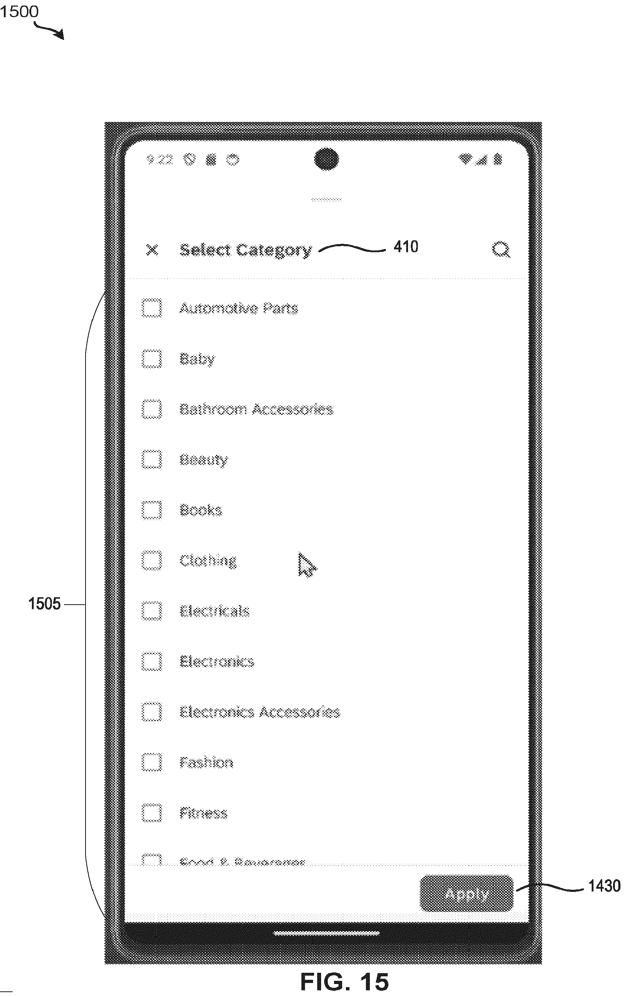

FIG. 15 illustrates a thirteenth exemplary user interface 1500 depicting a category page for a filtering feature. The thirteenth exemplary user interface 1500 can be reached by filtering by category 1410 as illustrated in FIG. 14. The thirteenth exemplary user interface 1500 prompts the user to select one or more categories 1505. The filters can be applied by depressing the Apply button 1430. The thirteenth exemplary user interface 1500 is merely an example of one potential user interface created with the data models and metadata as organized using artificial intelligence. Other user interface configurations are possible.

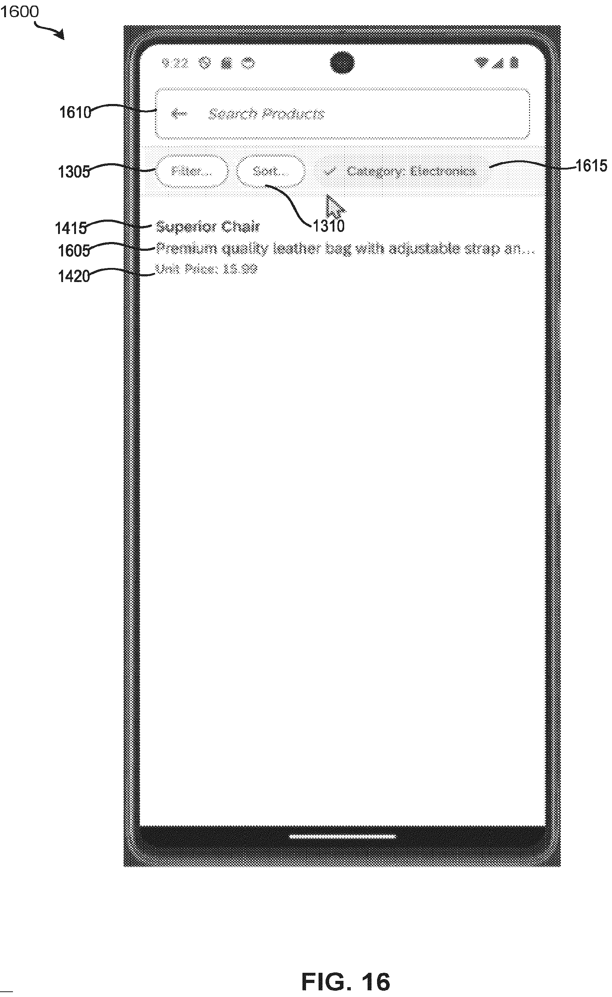

FIG. 16 illustrates a fourteenth exemplary user interface 1600 depicting a results page for a filtering feature. The fourteenth exemplary user interface 1600 display the product details as a result of using the filtering or search features. The product details can include product name 1415, product description 1605, and unit price 1420. The fourteenth exemplary user interface 1600 depicts a search bar 1610, a filter button 1305, and a sort button 1310. The fourteenth exemplary user interface 1600 depicts the currently selected sort/filter 1615 (e.g., Category: Electronics)

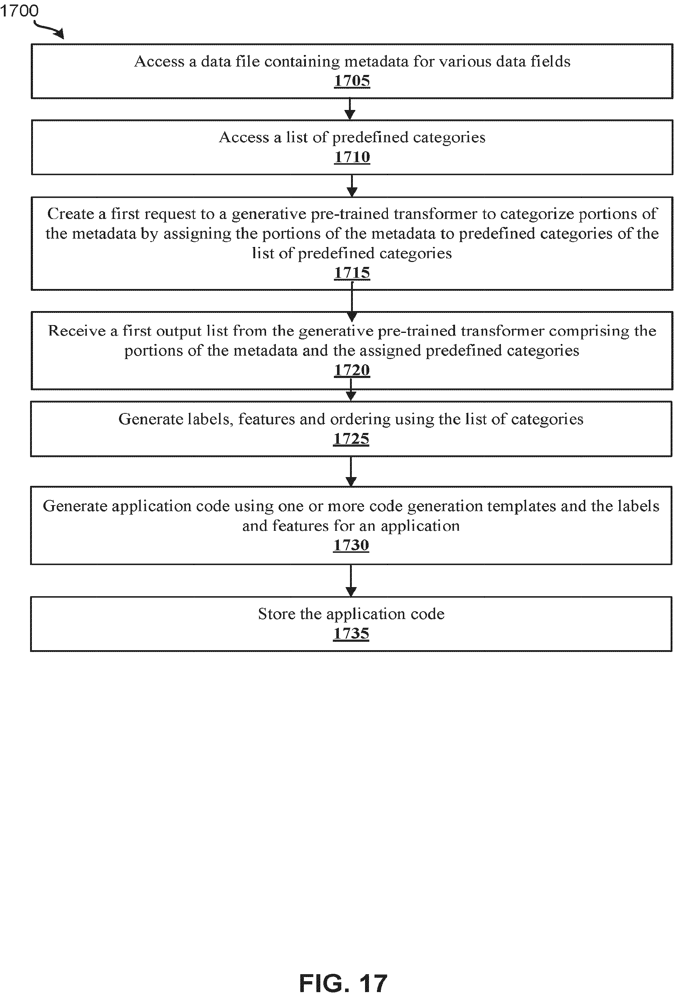

FIG. 17 illustrates a flowchart for a process 1700 for generating a user interface using artificial intelligence. In some implementations, one or more process blocks of Fig. 17 may be performed by a computing device.

At block 1705, process 1700 may include accessing a data file containing metadata for various data fields. For example, computing devices may access a data file containing metadata for various data fields, as described above. The data file and metadata can be stored in a memory (e.g., a cloud-based storage system).

In various embodiments, the data file may include an extensible markup language file. In various embodiments, the data file may include structures and objects in JavaScript Object Notation (JSON) format.

At block 1710, process 1700 may include accessing a list of predefined categories. In various embodiments, the predefined categories may be related to a business system. For example, computing devices may access a list of predefined categories, as described above. The list of predefined categories can be stored in a memory (e.g., a cloud-based storage system).

At block 1715, process 1700 may include creating a first request to a generative pre-trained transformer to categorize portions of the metadata by assigning the portions of the metadata to predefined categories of the list of predefined categories. For example, computing devices may create a first request to create a first request to a generative pre-trained transformer to categorize portions of the metadata using the list of predefined categories. In various embodiments, the first request may comprise a command request. A command request for a GPT model typically refers to a way to instruct the model to perform a specific task. The command-style prompt usually includes explicit instructions to guide the model in generating the desired response. Each command type directs the model to generate specific types of responses and can be tailored for the complexity, structure, or tone needed for a particular use case.

For categorizing complex/entity types (also known as structure types), the process 1700 can include in the prompt a JSON object such as {"Contact: '???', 'Visit': '???', ...}. The process 1700 can include in the prompt a JSON array of predefined structure categories such as: ["person", "organization", "task", ...]. The process 1700 can then request the GPT to replace each occurrence of "???" in the JSON object with the most appropriate category selected from the JSON array. For categorizing property (field) names, process 1700 can use the same strategy just the JSON object has property names, and the JSON array has property categories. For categorizing status (enumeration) values, process 1700 can use the same strategy just the JSON object has enumerator names, and the JSON array has status categories. For categorizing tag (enumeration) values, process 1700 can use the same strategy just the JSON object has enumerator names, and the JSON array has tag categories.

The actual list of categories related to a business system can be stored in a memory (e.g., a cloud-based storage system), process 1700 can also embed this list inside the code of the generator.

At block 1720, process 1700 may include receiving a first output list from the generative pre-trained transformer comprising the portions of the metadata and the assigned predefined categories. For example, computing devices may receive a first output list from the generative pre-trained transformer comprising the portions of the metadata and the assigned predefined categories, as described above. The list of categories can be stored in a memory (e.g., a cloud-based storage system). The process 1700 can store the list of categories as a JSON array, but any well-known format for an array/list that the GPT understands can also be used.

At block 1725, process 1700 may include generating labels, features, and ordering using the list of categories. For example, computing devices may generate labels, features, and ordering using the list of categories, as described above. Some example labels can include display contact name. Some exemplary features can include filtering and sorting features. Some exemplary ordering can be a logical display order (e.g., alphabetical order by first name, etc.).

Converting element names from the metadata into display labels (e.g., structure name "OrderItem" becomes label "Order Item," property name "OrderStatus" becomes "Order Status") can be performed by the GPT but not using categories. One of ordinary skill in the art would understand that the process 1700 can ask the GPT to convert model element names into display labels.

In the items of a list view (or the headers of a detail view), such as a Contact showing first/last names, then electronic mail address, then phone number, can be performed by the generator having a predefined ordering for the predefined categories. The GPT can assign categories (e.g., FirstName and LastName to the nameOfThing category, ContactEmail to the email category, MobilePhone to the phone category, HomeAddress & WorkAddress to the address category, etc.).

If a list view item can have a predefined number of rows of text information (e.g., three rows) such as headline/subheadline/footnote, the process 1700 can select the predefined number of the most "important" categories that were identified by the GPT (based on the predefined ordering) and choose headline with FirstName and LastName, subheadline with ContactEmail, footnote with MobilePhone). The HomeAddress, WorkAddress and other properties won't be seen in a list view item, because we filled the three available rows in the item with the more important categories.

If the Contact structure type does not have a MobilePhone property, so there was no property assigned to the "phone" category, then one of the contact's "address" properties can be chosen for inclusion in the list view.

The combination of GPT-selected categories with predefined category ordering results in an effective selection of the properties to be displayed in a list view (or header of a detail view).

In the body of a detail view, the order in which properties (with their associated labels and values) could again be selected by having a predefined ordering for categories that those properties have been assigned to by the GPT. So, categories could affect label ordering, while not affecting the actual label text.

When it comes to filtering, for example if a structure type has some property assigned to the "status" category, that property would be a prime candidate for filtering.

When it comes to sorting, for example if a structure type has some property assigned to the "priority" category, that property would be a prime candidate for sorting.

To generalize, the combination of GPT-selected categories (from a predefined list of categories), together with the generator having preferences (ordering or other) for those categories, means the generator is able to use the GPT to make informed decisions about where things are displayed and what features are enabled.

AI tools assist in categorizing data from the original model e.g., the names of entities. The techniques can use these categories to make informed decisions on how the information should be displayed.

The AI can determine priorities for displaying information. For example, the AI can determine the information in a headline of a list view and a details view.

At block 1730, process 1700 may include generating application code using one or more code generation templates and the labels and features for an application. For example, computing devices may generate application code using one or more code generation templates and the labels and features for an application, as described above. The inputs to the templates for generating application code can be the OData metadata and the data files containing the view definitions. The predefined categories (and associated preferences for ordering and features) can be built into the code of the generator, which the developer using the generator may not have visibility into.

At block 1735, process 1700 may include storing the application code. For example, computing devices may store the application code, as described above. The application code can be stored in a memory (e.g., a cloud-based storage system)

Process 1700 may include additional implementations, such as any single implementation or any combination of implementations described below and/or in connection with one or more other processes described elsewhere herein.

In various embodiments, the method further includes creating a second request to a generative pre-trained transformer to determine categories to filter business data from the data file using the list of predefined categories. The method further includes receiving a second output list of proposed filters from the generative pre-trained transformer. The method further includes generating one or more filters based on the second output list of proposed filters. The method further includes generating application code using one or more code generation templates and the one or more filters for the application. The method further includes storing the application code.

In various embodiments, the method further includes creating a third request to a generative pre-trained transformer to determine categories to sort business data from the data file using the list of predefined categories. The method further includes receiving a third output list of proposed sorting terms from the generative pre-trained transformer. The method further includes generating one or more sorting features to sort the metadata based on the third output list of proposed sorting terms. The method further includes generating application code using one or more code generation templates and the one or more sorting features for the application. The method further includes storing the application code.

In various embodiments, process 1700 may include assigning a color to a data element in a display for an application based at least in part on the list of categories specific to the data element. Properties with a "status" category or a "priority" category can be prime candidates for category-based color selection. In various embodiments, process 2400 can assign different colors to different legal values of an element, e.g., if a "PaymentStatus" property has legal values "Paid", "Unpaid," and "Refunded", then an appropriate color can be assigned to each of "Paid" / "Unpaid" / "Refunded".

In various embodiments, the generating application code may include parsing the data file to determine placeholders and elements. The generating application code may include generating a data model containing values to be substituted in the placeholders and the elements. The generating application code may further include serializing the data model into text. The generating application code may further include applying transformations to the text to convert them into a code format.

Although FIG. 17 shows example blocks of process 1700, in some implementations, process 1700 may include additional blocks, fewer blocks, different blocks, or differently arranged blocks than those depicted in FIG. 17. Additionally, or alternatively, two or more of the blocks of process 1700 may be performed in parallel.

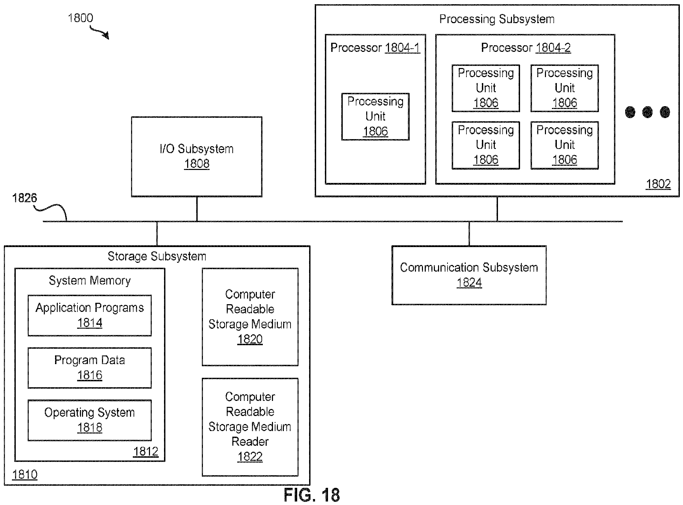

FIG. 18 illustrates an exemplary computer system 1800 for implementing various embodiments described above. Computer system 1800 may be a desktop computer, a laptop, a server computer, or any other type of computer system or combination thereof. In addition, computer system 1800 can implement many of the operations, methods, and/or processes described above (e.g., process 1700). As shown in FIG. 18, computer system 1800 includes processing subsystem 1802, which communicates, via bus subsystem 1826, with input/output (I/O) subsystem 1808, storage subsystem 1810 and communication subsystem 1824.

Bus subsystem 1826 is configured to facilitate communication among the various components and subsystems of computer system 1800. While bus subsystem 1826 is illustrated in FIG. 18 as a single bus, one of ordinary skill in the art will understand that bus subsystem 1826 may be implemented as multiple buses. Bus subsystem 1826 may be any of several types of bus structures (e.g., a memory bus or memory controller, a peripheral bus, a local bus, etc.) using any of a variety of bus architectures. Examples of bus architecture may include an Industry Standard Architecture (ISA) bus, a Micro Channel Architecture (MCA) bus, an Extended ISA (EISA) bus, a Video Electronics Standards Association (VESA) local bus, a Peripheral Component Interconnect (PCI) bus, a Universal Serial Bus (USB), etc.

Processing subsystem 1802, which can be implemented as one or more integrated circuits (e.g., a conventional microprocessor or microcontroller), controls the operation of computer system 1800. Processing subsystem 1802 may include one or more processors 1804. Each processor 1804 may include one processing unit 1806 (e.g., a single core processor such as processor 1804-1) or several processing units 1806 (e.g., a multicore processor such as processor 1804-2). In some embodiments, processors 1804 of processing subsystem 1802 may be implemented as independent processors while, in other embodiments, processors 1804 of processing subsystem 1802 may be implemented as multiple processors integrate into a single chip or multiple chips. Still, in some embodiments, processors 1804 of processing subsystem 1802 may be implemented as a combination of independent processors and multiple processors integrated into a single chip or multiple chips.

In some embodiments, processing subsystem 1802 can execute a variety of programs or processes in response to program code and can maintain multiple concurrently executing programs or processes. At any given time, some or all of the program code to be executed can reside in processing subsystem 1802 and/or in storage subsystem 1810. Through suitable programming, processing subsystem 1802 can provide various functionalities, such as the functionalities described above by reference to process 1700.

I/O subsystem 1808 may include any number of user interface input devices and/or user interface output devices. User interface input devices may include a keyboard, pointing devices (e.g., a mouse, a trackball, etc.), a touchpad, a touch screen incorporated into a display, a scroll wheel, a click wheel, a dial, a button, a switch, a keypad, audio input devices with voice recognition systems, microphones, image/video capture devices (e.g., webcams, image scanners, barcode readers, etc.), motion sensing devices, gesture recognition devices, eye gesture (e.g., blinking) recognition devices, biometric input devices, and/or any other types of input devices.

User interface output devices may include visual output devices (e.g., a display subsystem, indicator lights, etc.), audio output devices (e.g., speakers, headphones, etc.), etc. Examples of a display subsystem may include a cathode ray tube (CRT), a flat-panel device (e.g., a liquid crystal display (LCD), a plasma display, etc.), a projection device, a touch screen, and/or any other types of devices and mechanisms for outputting information from computer system 1800 to a user or another device (e.g., a printer).

As illustrated in FIG. 18, storage subsystem 1810 includes system memory 1812, computer-readable storage medium 1820, and computer-readable storage medium reader 1822. System memory 1812 may be configured to store software in the form of program instructions that are loadable and executable by processing subsystem 1802 as well as data generated during the execution of program instructions. In some embodiments, system memory 1812 may include volatile memory (e.g., random access memory (RAM)) and/or non-volatile memory (e.g., read-only memory (ROM), programmable read-only memory (PROM), erasable programmable read-only memory (EPROM), electrically erasable programmable read-only memory (EEPROM), flash memory, etc.). System memory 1812 may include different types of memory, such as static random-access memory (SRAM) and/or dynamic random-access memory (DRAM). System memory 1812 may include a basic input/output system (BIOS), in some embodiments, which is configured to store basic routines to facilitate transferring information between elements within computer system 1800 (e.g., during start-up). Such a BIOS may be stored in ROM (e.g., a ROM chip), flash memory, or any other type of memory that may be configured to store the BIOS.

As shown in FIG. 18, system memory 1812 includes application programs 1814, program data 1816, and operating system (OS) 1818. OS 1818 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Computer-readable storage medium 1820 may be a non-transitory computer-readable medium configured to store software (e.g., programs, code modules, data constructs, instructions, etc.). Many of the components and/or processes (e.g., process 1700) described above may be implemented as software that when executed by a processor or processing unit (e.g., a processor or processing unit of processing subsystem 1802) performs the operations of such components and/or processes. Storage subsystem 1810 may also store data used for, or generated during, the execution of the software.

Storage subsystem 1810 may also include computer-readable storage medium reader 1822 that is configured to communicate with computer-readable storage medium 1820. Together and optionally, in combination with system memory 1812, computer-readable storage medium 1820 may comprehensively represent remote, local, fixed, and/or removable storage devices plus storage media for temporarily and/or more permanently containing, storing, transmitting, and retrieving computer-readable information.

Computer-readable storage medium 1820 may be any appropriate media known or used in the art, including storage media such as volatile, non-volatile, removable, non-removable media implemented in any method or technology for storage and/or transmission of information. Examples of such storage media includes RAM, ROM, EEPROM, flash memory or other memory technology, compact disc read-only memory (CD-ROM), digital versatile disk (DVD), Blu-ray Disc (BD), magnetic cassettes, magnetic tape, magnetic disk storage (e.g., hard disk drives), Zip drives, solid-state drives (SSDs), flash memory card (e.g., secure digital (SD) cards, CompactFlash cards, etc.), USB flash drives, or any other type of computer-readable storage media or device.

Communication subsystem 1824 serves as an interface for receiving data from, and transmitting data to, other devices, computer systems, and networks. For example, communication subsystem 1824 may allow computer system 1800 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication subsystem 1824 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication subsystem 1824 may provide components configured for wired communication (e.g., Ethernet) in addition to or instead of components configured for wireless communication.

One of ordinary skill in the art will realize that the architecture shown in FIG. 18 is only an example architecture of computer system 1800, and that computer system 1800 may have additional or fewer components than shown, or a different configuration of components. The various components shown in FIG. 18 may be implemented in hardware, software, firmware, or any combination thereof, including one or more signal processing and/or application specific integrated circuits.

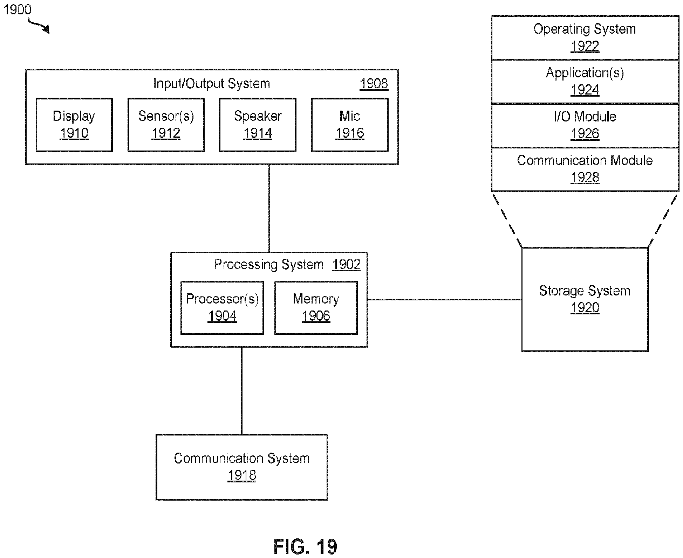

FIG. 19 illustrates an exemplary computing device 1900 for implementing various embodiments described above. Computing device 1900 may be a cellphone, a smartphone, a wearable device, an activity tracker or manager, a tablet, a personal digital assistant (PDA), a media player, or any other type of mobile computing device or combination thereof. In addition, computing device 1900 can implement many of the operations, methods, and/or processes described above (e.g., process 1700). As shown in FIG. 19, computing device 1900 includes processing system 1902, input/output (I/O) system 1908, communication system 1918, and storage system 1920. These components may be coupled by one or more communication buses or signal lines.

Processing system 1902, which can be implemented as one or more integrated circuits (e.g., a conventional microprocessor or microcontroller), controls the operation of computing device 1900. As shown, processing system 1902 includes one or more processors 1904 and memory 1906. Processors 1904 are configured to run or execute various software and/or sets of instructions stored in memory 1906 to perform various functions for computing device 1900 and to process data.

Each processor of processors 1904 may include one processing unit (e.g., a single core processor) or several processing units (e.g., a multicore processor). In some embodiments, processors 1904 of processing system 1902 may be implemented as independent processors while, in other embodiments, processors 1904 of processing system 1902 may be implemented as multiple processors integrated into a single chip. Still, in some embodiments, processors 1904 of processing system 1902 may be implemented as a combination of independent processors and multiple processors integrated into a single chip.

Memory 1906 may be configured to receive and store software (e.g., operating system 1922, applications 1924, I/O module 1926, communication module 1928, etc. from storage system 1920) in the form of program instructions that are loadable and executable by processors 1904 as well as data generated during the execution of program instructions. In some embodiments, memory 1906 may include volatile memory (e.g., random access memory (RAM)), non-volatile memory (e.g., read-only memory (ROM), programmable read-only memory (PROM), erasable programmable read-only memory (EPROM), electrically erasable programmable read-only memory (EEPROM), flash memory, etc.), or a combination thereof.

I/O system 1908 is responsible for receiving input through various components and providing output through various components. As shown for this example, I/O system 1908 includes display 1910, one or more sensors 1912, speaker 1914, and microphone 1916. Display 1910 is configured to output visual information (e.g., a graphical user interface (GUI) generated and/or rendered by processors 1904). In some embodiments, display 1910 is a touch screen that is configured to also receive touch-based input. Display 1910 may be implemented using liquid crystal display (LCD) technology, light-emitting diode (LED) technology, organic LED (OLED) technology, organic electro luminescence (OEL) technology, or any other type of display technologies. Sensors 1912 may include any number of different types of sensors for measuring a physical quantity (e.g., temperature, force, pressure, acceleration, orientation, light, radiation, etc.). Speaker 1914 is configured to output audio information and microphone 1916 is configured to receive audio input. One of ordinary skill in the art will appreciate that I/O system 1908 may include any number of additional, fewer, and/or different components. For instance, I/O system 1908 may include a keypad or keyboard for receiving input, a port for transmitting data, receiving data and/or power, and/or communicating with another device or component, an image capture component for capturing photos and/or videos, etc.

Communication system 1918 serves as an interface for receiving data from, and transmitting data to, other devices, computer systems, and networks. For example, communication system 1918 may allow computing device 1900 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication system 1918 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication system 1918 may provide components configured for wired communication (e.g., Ethernet) in addition to or instead of components configured for wireless communication.

Storage system 1920 handles the storage and management of data for computing device 1900. Storage system 1920 may be implemented by one or more non-transitory machine-readable mediums that are configured to store software (e.g., programs, code modules, data constructs, instructions, etc.) and store data used for, or generated during, the execution of the software. Many of the components and/or processes (e.g., process 1700) described above may be implemented as software that when executed by a processor or processing unit (e.g., processors 1904 of processing system 1902) performs the operations of such components and/or processes.

In this example, storage system 1920 includes operating system 1922, one or more applications 1924, I/O module 1926, and communication module 1928. Operating system 1922 includes various procedures, sets of instructions, software components and/or drivers for controlling and managing general system tasks (e.g., memory management, storage device control, power management, etc.) and facilitates communication between various hardware and software components. Operating system 1922 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Applications 1924 can include any number of different applications installed on computing device 1900. Examples of such applications may include a browser application, an address book application, a contact list application, an email application, an instant messaging application, a word processing application, JAVA-enabled applications, an encryption application, a digital rights management application, a voice recognition application, location determination application, a mapping application, a music player application, etc.

I/O module 1926 manages information received via input components (e.g., display 1910, sensors 1912, and microphone 1916) and information to be outputted via output components (e.g., display 1910 and speaker 1914). Communication module 1928 facilitates communication with other devices via communication system 1918 and includes various software components for handling data received from communication system 1918.

One of ordinary skill in the art will realize that the architecture shown in FIG. 19 is only an example architecture of computing device 1900, and that computing device 1900 may have additional or fewer components than shown, or a different configuration of components. The various components shown in FIG. 19 may be implemented in hardware, software, firmware, or any combination thereof, including one or more signal processing and/or application specific integrated circuits.

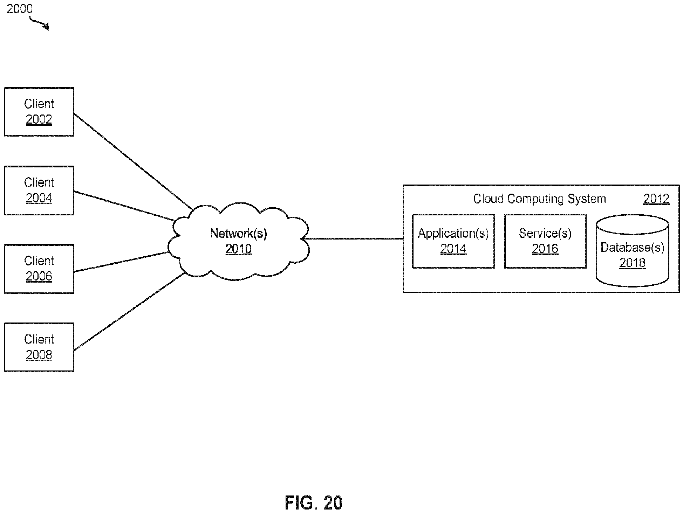

FIG. 20 illustrates an exemplary system 2000 for implementing various embodiments described above. For example, any client devices 2002, 2004, 2006, 2008 may be used to implement the cloud computing system 2012. As shown, system 2000 includes client devices 2002, 2004, 2006, and 2008, one or more networks 2010, and cloud computing system 2012. Cloud computing system 2012 is configured to provide resources and data to client devices 2002, 2004, 2006, and 2008 via networks 2010. In some embodiments, cloud computing system 2012 provides resources to any number of different users (e.g., customers, tenants, organizations, etc.). Cloud computing system 2012 may be implemented by one or more computer systems (e.g., servers), virtual machines operating on a computer system, or a combination thereof.

As shown, cloud computing system 2012 includes one or more applications 2014, one or more services 2016, and one or more databases 2018. Cloud computing system 2012 may provide applications 2014, services 2016, and databases 2018 to any number of different customers in a self-service, subscription-based, elastically scalable, reliable, highly available, and secure manner.

In some embodiments, cloud computing system 2012 may be adapted to automatically provision, manage, and track a customer's subscriptions to services offered by cloud computing system 2012. Cloud computing system 2012 may provide cloud services via different deployment models. For example, cloud services may be provided under a public cloud model in which cloud computing system 2012 is owned by an organization selling cloud services and the cloud services are made available to the general public or different industry enterprises. As another example, cloud services may be provided under a private cloud model in which cloud computing system 2012 is operated solely for a single organization and may provide cloud services for one or more entities within the organization. The cloud services may also be provided under a community cloud model in which cloud computing system 2012 and the cloud services provided by cloud computing system 2012 are shared by several organizations in a related community. The cloud services may also be provided under a hybrid cloud model, which is a combination of two or more of the aforementioned different models.

In some instances, any one of applications 2014, services 2016, and databases 2018 made available to client devices 2002, 2004, 2006, and -2008 via networks 2010 from cloud computing system 2012 is referred to as a "cloud service." Typically, servers and systems that make up cloud computing system 2012 are different from the on-premises servers and systems of a customer. For example, cloud computing system 2012 may host an application and a user of one of client devices 2002-2008 may order and use the application via networks 2010.

Applications 2014 may include software applications that are configured to execute on cloud computing system 2012 (e.g., a computer system or a virtual machine operating on a computer system) and be accessed, controlled, managed, etc. via client devices 2002-2008. In some embodiments, applications 2014 may include server applications and/or mid-tier applications (e.g., HTTP (hypertext transfer protocol) server applications, FTP (file transfer protocol) server applications, CGI (common gateway interface) server applications, JAVA server applications, etc.). Services 2016 are software components, modules, applications, etc. that are configured to execute on cloud computing system 2012 and provide functionalities to client devices 2002-2008 via networks 2010. Services 2016 may be web-based services or on-demand cloud services.

Databases 2018 are configured to store and/or manage data that is accessed by applications 2014, services 2016, and/or client devices 2002-2008. For instance, the customer sales data may be stored in databases 2018. Databases 2018 may reside on a non-transitory storage medium local to (and/or resident in) cloud computing system 2012, in a storage-area network (SAN), on a non-transitory storage medium local located remotely from cloud computing system 2012. In some embodiments, databases 2018 may include relational databases that are managed by a relational database management system (RDBMS). Databases 2018 may be a column-oriented databases, row-oriented databases, or a combination thereof. In some embodiments, some or all of databases 2018 are in-memory databases. That is, in some such embodiments, data for databases 2018 are stored and managed in memory (e.g., random access memory (RAM)).

Client devices 2002-2008 are configured to execute and operate a client application (e.g., a web browser, a proprietary client application, etc.) that communicates with applications 2014, services 2016, and/or databases 2018 via networks 2010. This way, client devices 2002-2008 may access the various functionalities provided by applications 2014, services 2016, and databases 2018 while applications 2014, services 2016, and databases 2018 are operating (e.g., hosted) on cloud computing system 2012. Although system 2000 is shown with four client devices, any number of client devices may be supported.

Networks 2010 may be any type of network configured to facilitate data communications among client devices (e.g., first client device 2002, second client device 2004, third client device 2006, and fourth client device 2008) and cloud computing system 2012 using any of a variety of network protocols. Networks 2010 may be a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.

The above description illustrates various embodiments of the present disclosure along with examples of how aspects of the present disclosure may be implemented. The above examples and embodiments should not be deemed to be the only embodiments and are presented to illustrate the flexibility and advantages of various embodiments of the present disclosure as defined by the following claims. Based on the above disclosure and the following claims, other arrangements, embodiments, implementations, and equivalents will be evident to those skilled in the art and may be employed without departing from the spirit and scope of the present disclosure as defined by the claims.

The foregoing disclosure provides illustration and description but is not intended to be exhaustive or to limit the implementations to the precise form disclosed. Modifications may be made in light of the above disclosure or may be acquired from practice of the implementations. As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting the implementations. Thus, the operation and behavior of the systems and/or methods are described herein without reference to specific software code - it being understood that software and hardware can be used to implement the systems and/or methods based on the description herein. As used herein, satisfying a threshold may, depending on the context, refer to a value being greater than the threshold, greater than or equal to the threshold, less than the threshold, less than or equal to the threshold, equal to the threshold, and/or the like, depending on the context. Although particular combinations of features are recited in the claims and/or disclosed in the specification, these combinations are not intended to limit the disclosure of various implementations. In fact, many of these features may be combined in ways not specifically recited in the claims and/or disclosed in the specification.

Although each dependent claim listed below may directly depend on only one claim, the disclosure of various implementations includes each dependent claim in combination with every other claim in the claim set. No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be openended terms. Further, the phrase "based on" is intended to mean "based, at least in part, on" unless explicitly stated otherwise. Also, as used herein, the term "or" is intended to be inclusive when used in a series and may be used interchangeably with "and/or" unless explicitly stated otherwise (e.g., if used in combination with "either" or "only one of").

## Claims

1. A computer implemented method comprising:
accessing a data file containing metadata for various data fields;
accessing a list of predefined categories;
creating a first request to a generative pre-trained transformer to categorize portions of the metadata by assigning the portions of the metadata to predefined categories of the list of predefined categories;
receiving a first output list from the generative pre-trained transformer comprising the portions of the metadata and the assigned predefined categories;
generating labels, features and ordering using the list of categories;
generating application code using one or more code generation templates and the labels and features for an application; and
storing the application code.

2. The computer implemented method of claim 1 further comprising:
creating a second request to a generative pre-trained transformer to determine categories to filter business data from the data file using the list of predefined categories;
receiving a second output list of proposed filters from the generative pre-trained transformer;
generating one or more filters based on the second output list of proposed filters;
generating application code using one or more code generation templates and the one or more filters for the application; and
store the application code.

3. The computer implemented method of claim 1 or 2 further comprising:
creating a third request to a generative pre-trained transformer to determine categories to sort business data from the data file using the list of predefined categories;
receiving a third output list of proposed sorting terms from the generative pre-trained transformer;
generating one or more sorting features to sort the metadata based on the third output list of proposed sorting terms;
generating application code using one or more code generation templates and the one or more sorting features for the application; and
store the application code.

4. The computer implemented method of any one of the preceding claims, wherein the data file comprises an extensible markup language file.

5. The computer implemented method of any one of the preceding claims, wherein the data file comprises structures and objects in JavaScript Object Notation (JSON) format.

6. The computer implemented method of any one of the preceding claims, further comprising assigning a color to a data element in a display for an application based at least in part on the list of categories specific to the data element.

7. The computer implemented method of any one of the preceding claims, wherein the generating application code comprises:
parsing the data file to determine placeholders and elements;
generating a data model containing values to be substitute in the placeholders and the elements;
serializing the data model into text; and
applying transformations to the text to convert into a code format.

8. A transitory or non-transitory computer-readable medium storing a set of instructions, the set of instructions comprising:
one or more instructions that, when executed by one or more processors of a device, cause the device to perform operations according to any one of the preceding claims.

9. A system comprising:
one or more processors configured to access code stored in a memory to perform operations comprising:
accessing a data file containing metadata for various data fields;
accessing a list of predefined categories;
creating a first request to a generative pre-trained transformer to categorize portions of the metadata by assigning the portions of the metadata to predefined categories of the list of predefined categories;
receiving a first output list from the generative pre-trained transformer comprising the portions of the metadata and the assigned predefined categories;
generating labels, features and ordering using the list of categories;
generating application code using one or more code generation templates and the labels and features for an application; and
storing the application code.

10. The system of claim 9, wherein the operations further comprise:
creating a second request to a generative pre-trained transformer to determine categories to filter business data from the data file using the list of predefined categories;
receiving a second output list of proposed filters from the generative pre-trained transformer;
generating one or more filters based on the second output list of proposed filters;
generating application code using one or more code generation templates and the one or more filters for the application; and
storing the application code.

11. The system of claim 9 or 10, wherein the operations further comprise:
creating a third request to a generative pre-trained transformer to determine categories to sort business data from the data file using the list of predefined categories;
receiving a third output list of proposed sorting terms from the generative pre-trained transformer;
generating one or more sorting features to sort the metadata based on the third output list of proposed sorting terms;
generating application code using one or more code generation templates and the one or more sorting features for the application; and
storing the application code.

12. The system of any one of claims 9 to 11, wherein the data file comprises an extensible markup language file.

13. The system of any one of claims 9 to 12, wherein the data file comprises structures and objects in JavaScript Object Notation (JSON) format.

14. The system of any one of claims 9 to 13, wherein the generating application code comprises:
parsing the data file to determine placeholders and elements
generating a data model containing values to be substitute in the placeholders and the elements
serializing the data model into text; and
applying transformations to the text to convert into a code format.
